(19) Europäisches Patentamt
European Patent Office
Office européen des brevets

(11) **EP 1 801 721 B1**

(12) **EUROPEAN PATENT SPECIFICATION**

(45) Date of publication and mention
of the grant of the patent:
**16.06.2010 Bulletin 2010/24**

(51) Int Cl.:
*G06F 21/00* *(2006.01)*   *H04L 29/06* *(2006.01)*

(21) Application number: **06025104.8**

(22) Date of filing: **05.12.2006**

(54) **Computer implemented method for securely acquiring a binding key for a token device and a secured memory device and system for securely binding a token device and a secured memory device**

Computerimplementiertes Verfahren zum sicheren Erfassen eines Bindungsschlüssels für eine Token-Vorrichtung und geschützte Speichervorrichtung und System zur sicheren Bindung einer Token-Vorrichtung und geschützte Speichervorrichtung

Procédé informatisé d'acquisition sécurisée de clé de liaison pour dispositif à jetons et dispositif de mémoire sécurisée et système de liaison sécurisée d'un dispositif à jetons et d'un dispositif de mémoire sécurisée

(84) Designated Contracting States:
**DE FR GB**

(30) Priority: **22.12.2005 US 317136**

(43) Date of publication of application:
**27.06.2007 Bulletin 2007/26**

(73) Proprietor: **MITSUBISHI ELECTRIC CORPORATION**
**Chiyoda-ku**
**Tokyo 100-8310 (JP)**

(72) Inventors:
• **Cukier, Johnas I.**
**Needham,**
**MA 02492 (US)**

• **Liang, Wei**
**Santa Cruz**
**California 95060 (US)**

(74) Representative: **Pfenning, Meinig & Partner GbR**
**Patent- und Rechtsanwälte**
**Theresienhöhe 13**
**80339 München (DE)**

(56) References cited:
**EP-A- 1 551 149     WO-A-02/054663**

• **SCHNEIER BRUCE: 'Applied Cryptography', 1996, JOHN WILEY & SONS, NEW YORK XP002230276 * page 47 - page 65 * * page 566 - page 572 ***

## Description

### Field of the Invention

This invention relates generally to securing data and devices, and more particularly to securing mobile devices, such as laptops, PDAs, cameras and mobile telephones, from unauthorized use.

### Background of the Invention

An increased demand for sharing data, performing business transactions, and mobile computing has enabled a wide range of small, mobile devices. Mobile device are easily lost or stolen. Therefore, there is a need to enhance security of mobile devices.

The vulnerability of mobile devices can be reduced with authentication mechanisms, such as passwords, biometrics, and asymmetric-key-based authentication. However, those methods place a burden on a user and degrade the performance of the device during the authentication process.

With password authentication, the user typically provides a user name and password. Memorizing and entering the user name and password is a burden. After the user has been authenticated, data stored in the mobile device are still open to unauthorized access by anyone that gains physical control of the device after authentication. If biometric authentication is used, such as face or fingerprint authentication, then false-error rates are a problem. In addition, biometric authentication requires power-consuming scanners.

U.S. Patent Application No. 2003/0005300 by Noble et al. describes a method and system for protecting files stored in a laptop (client) with a token (authentication server). When the token is near the laptop a Rijndael symmetric key exchange is performed before files can be accessed.

U.S. Patent No. 5,623,637 to Jones et al. provides a smart card to store an access password and encryption keys. To access data, the smart card is inserted in the device storing the data. The problem with that system is that the device can be compromised as soon as the card is inserted.

U.S. Patent No. 5,889,866 to Cyras et al. describes an integrated circuit (IC) card with a stored password. When the IC card is inserted in a computer device, password authentication can be performed to enable operation of the computer device.

WO 02/054663 A2 describes methods and apparatus for providing local authentication of subscribers travelling outside the home systems. A subscriber identification token provides authentication support by generating a signature based upon a key that has held secret from a mobile unit. A mobile unit that is programmed to wrongfully retain keys from a subscriber identification token after a subscriber has removed his or her token is prevented from subsequently accessing the subscribers account.

A collection of authentication and key exchange protocols is disclosed by Schneier, Bruce: "Applied Cryptography.

The following U.S. patents are also related generally to data protection: U.S. Patent Nos. 5,012,514; 5,091,939; 5,226,080; 5,375,243; 5,657,470; 6,189,099; 6,070,240; 6,088,450; 5,757,916; 5,544,321; 5,611,050; and 5,836,010.

### Summary of the Invention

A system and method protects mobile devices, such as laptops, PDAs, and mobile telephones with a wearable token.

The method performs token-enabled authentication to enable operation of the mobile device. Short range wireless communication is used between the token and the mobile device for the purpose of authentication.

### Brief Description of the Drawings

Figure 1 is a block diagram of a system and method for protecting a mobile device according to an embodiment of the invention;

Figure 2 is a block diagram of a system and method for protecting a mobile device with a binding key according to an embodiment of the invention;

Figure 3 is a diagram of an authentication exchange according to an embodiment of the invention; and

Figure 4 is a diagram of an authentication exchange according to another embodiment of the invention.

### Detailed Description of the Preferred Embodiment

The authentication method described herein uses two stages: an initialization stage and a normal usage stage. The initialization stage is accomplished using one of two methods described below. The normal usage stage is a periodic authentication via a nonce that simultaneously verifies the presence of the authenticated token and prevents replay attacks.

### Mobile Device, Secured Memory Device, and Token

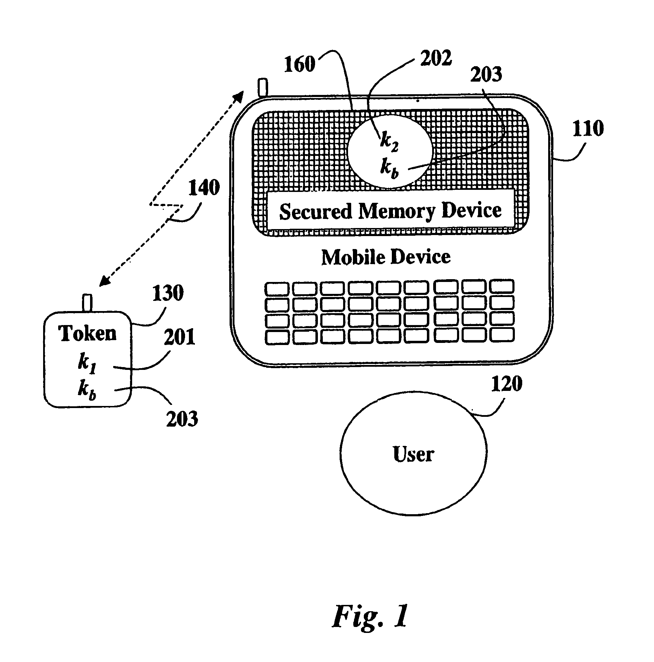

Figure 1 shows a system and method for securing a mobile device 110, such as a PDA, laptop, camera, removable data storage device, or mobile telephone. A token (or a token device) 130 stores a token key $k_1$ 201 and a binding key $k_b$ 203. A secured memory device key $k_2$ 202 and the binding key $k_b$ 203 are stored securely within the mobile device 110 via a secured memory device 160.

In a preferred embodiment, the stored token key and secured memory device key, $k_1$ 201 *and* $k_2$ 202, can be encrypted, e.g., as hashed values, to avoid exposure when the secured memory device 160 or token 130 is lost, stolen, or otherwise compromised. The keys $k_1$ and $k_2$ are stored in the token and the secured memory device by a source, e.g., a retailer or a manufacturer. The binding key, $k_b$ 203, is generated during the initialization stage.

Typically, the token 130 is in the physical control of the user 120. For example, the user carries the token in a pocket, or a leash attaches the token to the user.

The mobile device 110 can communicate with the token 130 via a wireless channel 140 and with the secured memory device 160. The wireless channel is a short-range communication link, e.g., the link complies with the Bluetooth specification, IEEE 802.15.1 standard, June 14, 2002, incorporated herein by reference. Depending on the power level, the range for different classes of Bluetooth devices can be from 10 cm to 100 m. Thus, it can be required that the token 130 needs to be in close physical proximity to the mobile device 110 before the mobile device is enabled for operation.

### Normal Usage

Figure 1 depicts the normal use stage. The mobile device 110 detects the presence of the token 130 by a radio signal, e.g., a carrier, in the wireless channel 140. The mobile device 110 under direction from the secured memory device 160 periodically generates a nonce and expects a response from the token for authentication purposes. If the nonce response supplied by the token satisfies the required response by the secured memory device, then the mobile device is enabled for operation.

It should be understood that the secured memory device can store multiple binding keys, $k_b$ 203, that can be enabled by different tokens and different users. Furthermore, it should be understood that different keys and passwords can enable access to distinct data stored in a secure memory of the mobile device, or particular applications or different hardware functions of the mobile device. In another variation, the token can enable multiple devices that store the same binding key $k_b$ 203 as the token. In another variation, the token stores multiple binding keys $k_b$ 203 for different secured memory devices.

### Initialization Stage with Authentication Server

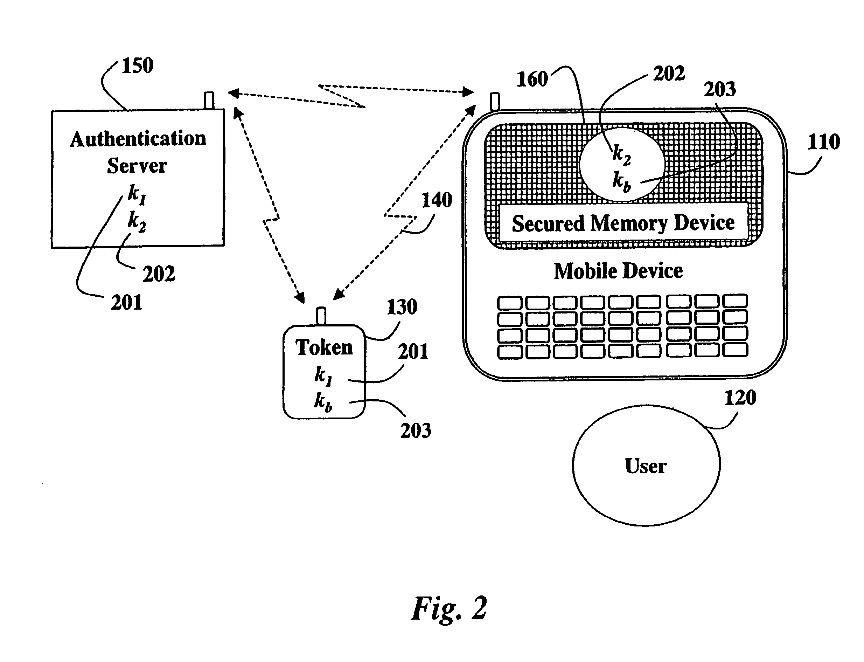

Figure 2 shows an embodiment of the invention that uses an authentication server 150. The token 130 stores the token key $k_1$ 201, and the secured memory device 160 within a mobile device 110 stores the secured memory device key $k_2$ 202. When the user 120 acquires the token and the secured memory device, the user can bind the devices 130 and 160 from the respective sources via an authentication server 150. The authentication server 150 accesses the token 130 via its token key $k_1$ 201, and accesses the secured memory device 160 via its secured memory device key $k_2$ 202 in order to place a binding key $k_b$ 203 in the token 130 and secured memory device 160. The result is the token 130 and secured memory device 160 are now bound to each other without intervention by a user 120.

The binding key $k_b$ 203 is stored in the token and the secured memory device for the normal usage stage. The binding key is stored in the token and the secured memory device 110 until the binding key is removed through an unbinding of the token and secured memory device. Unbinding can occur for the following reasons: access privileges have changed, either the token or the mobile device has changed ownership, or either the token or the device has been lost or stolen.

After the token or tokens are bound to the secured memory device, the secured memory device refuses any further change in bindings unless at least one of the original legitimate tokens is present. This prevents a stolen secured memory device from binding with any token.

**Initialization Stage with Authentication Server Key Exchange**

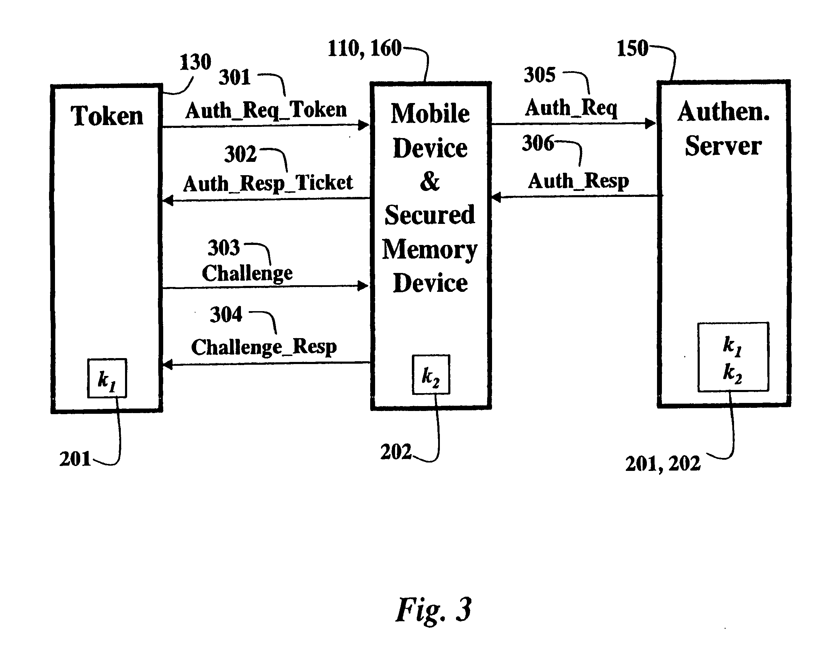

The secured memory device and token can 'bind' as shown in Figure 3. The token 130 sends a first authentication request message 301, Auth_Req_Token, to the mobile device 110 for the initial authentication. The message Auth_Req_Token is defined as:

$$(\text{Auth\_Req\_Token} = \{ID_t, \text{AuthReq}\}),$$

where $ID_t$ is an identification of the token, and AuthReq indicates that this message is for the initial authentication with the mobile device.

In response to receiving the authentication request message Auth_Req_Token, the mobile device 110 appends the secured memory device's identification, $ID_s$, to the message generating Auth_Req 305, which is defined as:

$$(\text{Auth\_Req} = \{ID_t, ID_s, \text{AuthReq}\}),$$

where $ID_s$ is an identification of the secured memory device 160 of the mobile device 110. This message is forwarded to the authentication server 150. The authentication server looks up both IDs and responds with an authentication response message, Auth_Resp 306. The message structure for Auth_Resp is defined as:

$$(\text{Auth\_Resp} = \{ID_s, k_b, \{ID_t, k_b\}^{k_1}\}^{k_2}),$$

where this message and message portions are encrypted with both the token and the secured memory device keys $k_1$ and $k_2$. $ID_t$ is an identification of the token, $ID_s$ is an identification of the secured memory device, $k_1$ is the token device key 201, $k_2$ is the secured memory device key 202, and $k_b$ is the binding key 203 that binds the token and secured memory device. The secured memory device decrypts its portion of the message, Auth_Resp, stores the binding key $k_b$ 203, and forwards the remaining part of the message, Auth_Resp_Ticket 302, to the token. Auth_Resp_Ticket is defined as follows:

$$(\text{Auth\_Resp\_Ticket} = \{ID_t, k_b\}^{k_1}).$$

The token decrypts this message and stores the binding key, $k_b$ 203, as well. The token then sends a challenge message, Challenge 303, using a nonce. The nonce is generated by the token using a random number. The random number R is encrypted using the binding key, $k_b$ 203, and is formulated as follows:

$$(\text{Challenge} = \{R\}^{k_b}).$$

The secured memory device responds to the challenge, Challenge_Resp 304, by decrypting the nonce, calculating the nonce response, and encrypting the nonce response with the binding key, $k_b$ 203 as follows:

$$(\text{Challenge\_Resp} = \{R-1\}^{k_b}).$$

The token decrypts the nonce response and if the nonce response satisfies the token's requirements, then the secured memory device and token are bound via the binding key, $k_b$ 203.

**Initialization Stage without Authentication Server**

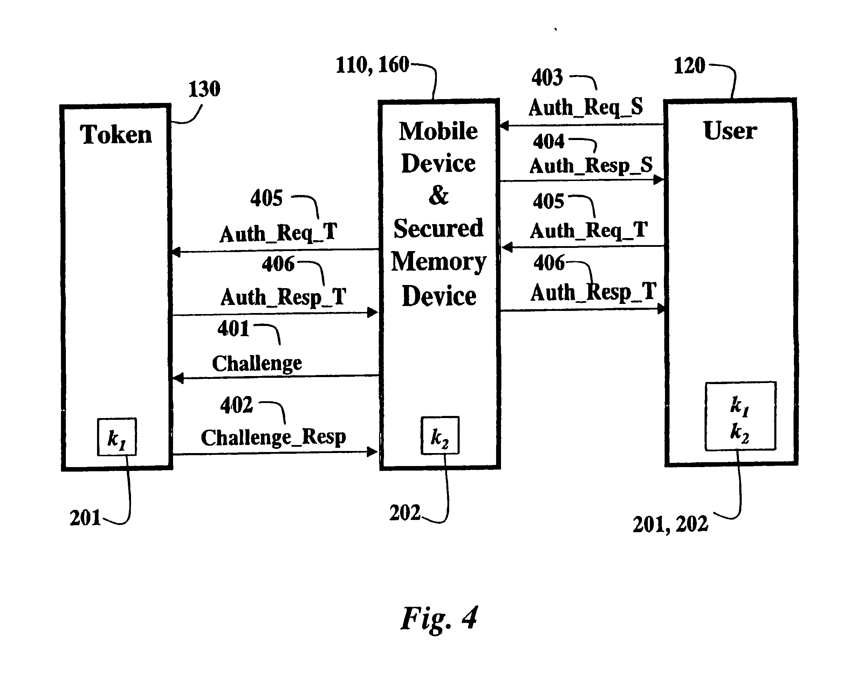

Figure 4 shows an alternative embodiment of the invention that involves the user 120. The token 130 stores a token key $k_1$ 201, and the secured memory device 160 within the mobile device 110 stores a secured memory device key $k_2$ 202. Both devices also store a default binding key $k_{b0}$. When the user acquires the token and the secured memory device, the user also acquires a encryption of the keys 201-202 from the respective sources. The user 120 accesses the token 130 via a message embedded with the token key $k_1$ 201, and accesses the secured memory device 160 via a message embedded with the secure memory device key $k_2$ 202 in order to store the binding key $k_b$ 203 in the token 130 and secured memory device 160. The result is the token 130 and secured memory device 160 are now bound to each other.

The binding key $k_b$ 203 is stored in the token and the secured memory device for the normal usage stage. The binding key is stored in the token and the mobile device until the binding key is removed through an unbinding of the token and mobile device. Unbinding occurs for the following reasons: access privileges have changed, either the token or the mobile device has changed ownership, or either the token or the device has been lost or stolen.

**Initialization Stage without Authentication Server Key Exchange**

The secured memory device and token also can 'bind' as shown in Figure 4. The user 120, sends a first authentication request message, Auth_Req_S 403, to the secured memory device 160 for the initial authentication. Any communications device can be used to send this message. The message Auth_Req_S is defined as:

$$(\text{Auth\_Req\_S} = \{k_2\}^{k_2}),$$

where $k_2$ is the secured memory device key 201 of the secured memory device 160 indicating a request for the user's initial authentication with the secured memory device.

In response to receiving the authentication request message, Auth_Req_S, the secured memory device 160 sends an authentication response message, Auth_Resp_S 404. The message Auth_Resp_S is defined as:

$$(\text{Auth\_Resp\_S} = \{AuthResp\}),$$

where AuthResp indicates that authentication was successful.

The user 120 submits an authentication request to the token 130 via the secured memory device 160 by sending the Auth_Req_T 405 defined as:

$$(\text{Auth\_Req\_T} = \{k_1\}^{k_1}),$$

where $k_1$ is the token key 201 of the token 130 indicating a request for the user's initial authentication with the token.

In response to receiving the authentication request message, Auth_Req_T, the token device 130 sends an authentication response message, Auth_Resp_T 406. The message Auth_Resp_T is defined as:

$$(\text{Auth\_Resp\_T} = \{AuthResp\}),$$

where AuthResp indicates that authentication was successful.

The secured memory device then sends a challenge message, Challenge 401, using a nonce which also becomes the new binding key, $k_b$. The nonce is generated by the secure memory device using a random number and encrypted using the default binding key, $k_{b0}$, and is formulated as follows:

$$(\text{Challenge} = \{k_b\}^{k_{b_0}}).$$

The token device responds to the challenge, Challenge_Resp 402, by decrypting the nonce, calculating the nonce response, and encrypting it with the default binding key, $k_{b_0}$, as follows:

$$(\text{Challenge\_Resp} = \{k_b - 1\}^{k_{b_0}}).$$

The secured memory device decrypts the nonce response. If the nonce response satisfies the secured memory device's requirements, then the secured memory device and token are bound via the new binding key, $k_b$. Challenge exchanges used for normal usage immediately follow at this point.

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

**Claims**

1. A computer implemented method for securely acquiring a binding key for a token device and a secured memory device, comprising the steps of: storing a token key in a token device;
storing a secured memory device key in a secured memory device of a mobile device;
accessing, by an authentication server, the token device via the token key and the secured memory device via the secured memory device key to store a binding key in the token device and the secured memory device,
sending, from the token device to the mobile device, a first authentication request message, Auth_Req_Token, in which the first authentication request message is defined as:

$$(\texttt{Auth\_Req\_Token} = \{\texttt{ID}_t, \texttt{AuthReq}\}),$$

where $ID_t$ is an identification of the token device, and AuthReq indicates that the first authentication request message is for initial authentication with the mobile device;
generating, in the mobile device and in response to receiving the first authentication request message, a second authentication request message, Auth_Req, in which the second authentication request message is defined as:

$$(\texttt{Auth\_Req} = \{\texttt{ID}_t, \texttt{ID}_s, \texttt{AuthReq}\}),$$

where $ID_s$ is an identification of the secured memory device of the mobile device;
sending the second authentication request message to an authentication server;
the authentication server responding with a first authentication response message, Auth_Resp, defined as:

$$(\texttt{Auth\_Resp} = \{\texttt{ID}_s, k_b, \{\texttt{ID}_t, k_b\}^{k_1}\}^{k_2}),$$

where the first authentication response message is encrypted with the secured memory device key $k_2$, and the identification of the token device and the binding key $k_b$ are encrypted with the token key $k_1$ and the secured memory device key $k_2$;
decrypting, by the secured memory device, the first authentication response message;
storing the binding key $k_b$ in the secured memory device;
forwarding, to the token device, an second authentication response message, Auth_Resp_Ticket, in which the second authentication response message is defined as:

$$(\texttt{Auth\_Resp\_Ticket} = \{ID_t, k_b\}^{k}_{1});$$

decrypting, by the token device, the second authentication response message; and
storing the binding key $k_b$ in the token device.

2. A computer implemented method for securely acquiring a binding key for a token device and a secured memory device, comprising the steps of: storing a token key in a token device;
storing a secured memory device key in a secured memory device of a mobile device;
accessing, by a user, the token device using the token key and the secured memory device using the secured memory device key to
store a binding key in the token device and the secured memory device,
generating, in the secured memory device, a binding key,
sending, from a user to a secured memory device, a first authentication request message, Auth_Req_S, in which the first authentication message is defined as:

$$(\texttt{Auth\_Req\_S} = \{k_2\}^{k}_{2}),$$

where $k_2$ is a secured memory device key; generating, in the mobile device and in response to receiving the first authentication request message, a first authentication response message, Auth_Resp_S, in which the first authentication response message is defined as:

$$(\texttt{Auth\_Resp\_S} = \{AuthResp\}),$$

where AuthResp indicates that authentication was successful;
sending, from a mobile device to a token device, a second authentication request message, Auth_Req_T, in which the second authentication request message is defined as:

$$(\texttt{Auth\_Req\_T} = \{k_1\}^{k}_{1}),$$

where $k_1$ is a token device key;
generating, in the token device and in response to receiving the second authentication request message, a second authentication response message, Auth_Resp_T, in which the second authentication response message is defined as:

$$(\texttt{Auth\_Resp\_T} = \{AuthResp\}),$$

where AuthResp indicates that authentication was successful;
generating, in the secured memory device, a binding key;
storing the binding key in the secured memory device;
encrypting the binding key with a default binding key;
sending the encrypted binding key to the token device;
decrypting, with the default binding key, the encrypted binding key to retrieve the binding key; and
storing the binding key in the token device.

3. A system being adapted to carry out a method according to claim 1.

4. A system being adapted to carry out a method according to claim 2.

**Patentansprüche**

1.  Computerimplementiertes Verfahren zum sicheren Erwerben eines Bindungsschlüssels für eine Tokenvorrichtung und eine gesicherte Speichervorrichtung, aufweisend die Schritte:

    Speichern eines Tokenschlüssels in einer Tokenvorrichtung;
    Speichern eines Schlüssels einer gesicherten Speichervorrichtung in einer gesicherten Speichervorrichtung einer mobilen Vorrichtung; Zugreifen, mittels eines Berechtigungsservers, zu der Tokenvorrichtung über den Tokenschlüssel und der gesicherten Speichervorrichtung über den Schlüssel der gesicherten Speichervorrichtung, um einen Bindungsschlüssel in der Tokenvorrichtung und der gesicherten Speichervorrichtung zu speichern,
    Senden einer ersten Berechtigungsanforderungsnachricht, Auth_Req_Token, von der Tokenvorrichtung zu der mobilen Vorrichtung, in der die erste Berechtigungsanforderungsnachricht definiert ist als

    $$(\texttt{Auth\_Req\_Token} = \{ID_t, \texttt{AuthReq}\}),$$

    worin $ID_t$ eine Identifizierung der Tokenvorrichtung ist und AuthReq anzeigt, dass die erste Berechtigungsanforderungsnachricht für eine anfängliche Berechtigung mit der mobilen Vorrichtung ist;
    Erzeugen einer zweiten Berechtigungsanforderungsnachricht, Auth_Req, in der mobilen Vorrichtung und als Antwort auf den Empfang der ersten Berechtigungsanforderungsnachricht, in der die zweite Berechtigungsanforderungsnachricht definiert ist als:

    $$(\texttt{Auth\_Req} = \{ID_t, ID_s, \texttt{AuthReq}\}),$$

    worin $ID_s$ eine Identifizierung der gesicherten Speichervorrichtung der mobilen Vorrichtung ist; Senden der zweiten Berechtigungsanforderungsnachricht zu einem Berechtigungsserver;
    der Berechtigungsserver mit einer ersten Berechtigungsantwortnachricht, Auth_Resp, antwortet,
    die definiert ist als:

    $$(\texttt{Auth\_Resp} = \{ID_S, k_b, \{ID_t, k_b\}^{k}_{1}\}^{k}_{2}),$$

    wobei die erste Berechtigungsantwortnachricht mit dem Schlüssel $k_2$ der gesicherten Speichervorrichtung verschlüsselt wird, und die Identifizierung der Tokenvorrichtung und des Bindungsschlüssels $k_b$ mit dem Tokenschlüssel $k_1$ und dem Schlüssel $k_2$ der gesicherten Speichervorrichtung verschlüsselt werden;
    Entschlüsseln der ersten Berechtigungsantwortnachricht durch die gesicherte Speichervorrichtung;
    Speichern des Bindungsschlüssels $k_b$ in der gesicherten Speichervorrichtung;
    Befördern einer zweiten Berechtigungsantwortnachricht, Auth_Resp_Ticket, zu der Tokenvorrichtung, in der die zweite Berechtigungsantwortnachricht definiert ist als:

    $$(\texttt{Auth\_Resp\_Ticket} = \{ID_t, k_b\}^{k}_{1});$$

    Entschlüsseln der zweiten Berechtigungsantwortnachricht durch die Tokenvorrichtung; und
    Speichern des Bindungsschlüssels $k_b$ in der Tokenvorrichtung.

2.  Computerimplementiertes Verfahren zum sicheren Erwerben eines Bindungsschlüssels für eine Tokenvorrichtung und eine gesicherte Speichervorrichtung, aufweisend die Schritte:

    Speichern eines Tokenschlüssels in einer Tokenvorrichtung;
    Speichern eines Schlüssels der gesicherten Speichervorrichtung in einer gesicherten Speichervorrichtung einer mobilen Vorrichtung;
    Zugreifen durch einen Benutzer zu der Tokenvorrichtung unter Verwendung des Tokenschlüssels und der gesicherten Speichervorrichtung unter Verwendung des Schlüssels der gesicherten Speichervorrichtung, um einen Bindungsschlüssel in der Tokenvorrichtung und der gesicherten Speichervorrichtung zu speichern,

Erzeugen eines Bindungsschlüssels in der gesicherten Speichervorrichtung,
Senden einer ersten Berechtigungsanforderungsnachricht, Auth_Req_S, von einem Benutzer zu einer gesicherten Speichervorrichtung, in der die erste Berechtigungsnachricht definiert ist als:

$$(\texttt{Auth\_Req\_S} = \{k_2\}^k{}_2),$$

wobei $k_2$ ein Schlüssel der gesicherten Speichervorrichtung ist;
Erzeugen einer ersten Berechtigungsantwortnachricht, Auth_Resp_S, in der mobilen Vorrichtung und als Antwort auf den Empfang der ersten Berechtigungsanforderungsnachricht, in der die erste Berechtigungsantwortnachricht definiert ist als:

$$(\texttt{Auth\_Resp\_S} = \{\texttt{AuthResp}\}),$$

worin AuthResp anzeigt, dass die Berechtigung erfolgreich war;
Senden einer zweiten Berechtigungsantwortnachricht, Auth_Req_T, von einer mobilen Vorrichtung zu einer Tokenvorrichtung, in der die zweite Berechtigungsantwortnachricht definiert ist als:

$$(\texttt{Auth\_Req\_T} = \{k_1\}^k{}_1),$$

worin $k_1$ ein Schlüssel der Tokenvorrichtung ist; Erzeugen einer zweiten Berechtigungsantwortnachricht, Auth_Resp_T, in der Tokenvorrichtung und als Antwort auf den Empfang der zweiten Berechtigungsanforderungsnachricht, in der die zweite Berechtigungsantwortnachricht definiert ist als:

$$(\texttt{Auth\_Resp\_T} = \{\texttt{AuthResp}\}),$$

worin AuthResp anzeigt, dass die Berechtigung erfolgreich war;
Erzeugen eines Bindungsschlüssels in der gesicherten Speichervorrichtung;
Speichern des Bindungsschlüssels in der gesicherten Speichervorrichtung;
Verschlüsseln des Bindungsschlüssels mit einem Standardbindungsschlüssel;
Senden des verschlüsselten Bindungsschlüssels zu der Tokenvorrichtung;
Entschlüsseln des verschlüsselten Bindungsschlüssels mit dem Standardbindungsschlüssel, um den Bindungsschlüssel wiederzugewinnen; und
Speichern des Bindungsschlüssels in der Tokenvorrichtung.

3. System, das ausgebildet ist, ein Verfahren gemäß Anspruch 1 durchzuführen.

4. System, das ausgebildet ist, ein Verfahren gemäß Anspruch 2 durchzuführen.

**Revendications**

1. Procédé informatisé d'acquisition sécurisée de clé de liaison pour dispositif à jetons et dispositif à mémoire sécurisée, comprenant les étapes consistant à :

    stocker une clé à jeton dans un dispositif à jetons ;
    stocker une clé de dispositif à mémoire sécurisée dans un dispositif à mémoire sécurisée d'un dispositif mobile ;
    accéder, par un serveur d'authentification, au dispositif à jetons via la clé à jeton et au dispositif à mémoire sécurisée via la clé du dispositif à mémoire sécurisée afin de stocker une clé de liaison dans le dispositif à jetons et le dispositif à mémoire sécurisée,
    envoyer, du dispositif à jetons au dispositif mobile, un premier message de demande d'authentification, Auth_Req_Token, dans lequel le premier message de demande d'authentification est défini par :

$$(\text{Auth\_Req\_Token} = \{ID_t, \text{AuthReq}\}),$$

où $ID_t$ est une identification du dispositif à jetons, et AuthReq indique que le premier message de demande d'authentification est destiné à une authentification initiale avec le dispositif mobile ; générer, dans le dispositif mobile et en réponse à la réception du premier message de demande d'authentification, un second message de demande d'authentification, Auth_Req, dans lequel le second message de demande d'authentification est défini par :

$$(\text{Auth\_Req} = \{ID_t, ID_S, \text{AuthReq}\}),$$

où $ID_S$ est une identification du dispositif à mémoire sécurisée du dispositif mobile ; envoyer le second message de demande d'authentification à un serveur d'authentification ; le serveur d'authentification répondant par un premier message de réponse d'authentification,

$$\text{Auth\_Resp, défini par : } (\text{Auth\_Resp} = \{ID_S, k_b, \{ID_t, K_b\}^{k}_{1}\}^{k}_{2}),$$

où le premier message de réponse d'authentification est crypté par la seconde clé du dispositif à mémoire sécurisée $k_2$, et l'identification du dispositif à jetons et la clé de liaison $k_b$ sont cryptées par la clé à jeton $k_1$ et la clé du dispositif à mémoire sécurisée $k_2$;
décrypter, par le dispositif à mémoire sécurisée, le premier message de réponse d'authentification ;
stocker la clé de liaison $k_b$ dans le dispositif à mémoire sécurisée ;
transmettre, au dispositif à jetons, un second message de réponse d'authentification, Auth_Resp_Ticket, dans lequel le second message de réponse d'authentification est défini par :

$$(\text{Auth\_Resp\_Ticket} = \{ID_t, k_b\}^{k}_{1}) ;$$

décrypter, par le dispositif à jetons, le second message de réponse d'authentification ; et
stocker la clé de liaison $k_b$ dans le dispositif à jetons.

2. Procédé informatisé d'acquisition sécurisée de clé de liaison pour dispositif à jetons et dispositif à mémoire sécurisée, comprenant les étapes consistant à :

stocker une clé à jeton dans un dispositif à jetons ;
stocker une clé de dispositif à mémoire sécurisée dans un dispositif à mémoire sécurisée d'un dispositif mobile ;
accéder, par un utilisateur, au dispositif à jetons en utilisant la clé à jeton et le dispositif à mémoire sécurisée en faisant usage de la clé du dispositif à mémoire sécurisée pour stocker la clé de liaison dans le dispositif à jetons et le dispositif à mémoire sécurisée,
générer, dans le dispositif à mémoire sécurisée, une clé de liaison,
envoyer, d'un utilisateur à un dispositif à mémoire sécurisée, un premier message de demande d'authentification, Auth_Req_S, dans lequel le premier message d'authentification est défini par :

$$(\text{Auth\_Req\_S} = \{k_2\}^{k}_{2}),$$

où $k_2$ est une clé du dispositif à mémoire sécurisée ;
générer, dans le dispositif mobile et en réponse à la réception du premier message de demande d'authentification, un premier message de réponse d'authentification, Auth_Resp_S, dans lequel le premier message de réponse d'authentication est défini par : (Auth_Resp_S = {AuthResp}),
où AuthResp indique que l'authentification a réussi ;
envoyer, d'un dispositif mobile à un dispositif à jetons, un second message de demande d'authentification, Auth_Req_T, dans lequel le second message de demande d'authentification est défini par : $(\text{Auth\_Req\_T} = \{k_1\}^{k}_{1})$, où $k_1$

est une clé du dispositif à jetons ;

générer, dans le dispositif à jetons et en réponse à la réception du second message de demande d'authentification, un second message de réponse d'authentification, Auth_Resp_T, dans lequel le second message de réponse d'authentification est défini par : (Auth_Resp_T = {AuthResp}),

où AuthResp indique que l'authentification a réussi ;

générer, dans le dispositif à mémoire sécurisée, une clé de liaison ;

stocker la clé de liaison dans le dispositif à mémoire sécurisée ;

crypter la clé de liaison avec une clé de liaison par défaut ;

envoyer la clé de liaison cryptée au dispositif à jetons ;

décrypter, avec la clé de liaison par défaut, la clé de liaison cryptée pour récupérer la clé de liaison ; et

stocker la clé de liaison dans le dispositif à jetons.

3. Système adapté pour effectuer un procédé selon la revendication 1.

4. Système adapté pour effectuer un procédé selon la revendication 2.

*Fig. 1*

*Fig. 2*

*Fig. 3*

EP 1 801 721 B1

**130**

**Token**

**110, 160**

**Mobile Device & Secured Memory Device**

**120**

**User**

**403**
Auth_Req_S

**404**
Auth_Resp_S

**405**
Auth_Req_T

**405**
Auth_Req_T

**406**
Auth_Resp_T

**406**
Auth_Resp_T

**401**
Challenge

**402**
Challenge_Resp

$k_1$

$k_2$

$k_1$
$k_2$

**201**

**202**

**201, 202**

*Fig. 4*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030005300 A
- US 5623637 A
- US 5889866 A
- WO 02054663 A2
- US 5012514 A
- US 5091939 A
- US 5226080 A
- US 5375243 A
- US 5657470 A
- US 6189099 B
- US 6070240 A
- US 6088450 A
- US 5757916 A
- US 5544321 A
- US 5611050 A
- US 5836010 A